# EUROPÄISCHE PATENTSCHRIFT

(11) **EP 2 711 885 B1**
(45) Veröffentlichungstag und Bekanntmachung des Hinweises auf die Patenterteilung: **06.07.2022**
(21) Anmeldenummer: 13185120.6
(22) Anmeldetag: 19.09.2013
(51) Int. Cl.: G06Q 20/32, G06K 7/10

(54) **Prozessvorrichtung mit Umwandlungseinrichtung**
Process device with conversion equipment
Dispositif de traitement doté d'un dispositif de conversion

(30) Priorität: 25.09.2012 DE 102012217325
(43) Veröffentlichungstag der Anmeldung: 26.03.2014
(73) Patentinhaber: HOMAG GmbH, 72296 Schopfloch (DE)
(72) Erfinder: Schneider, Franz, 78667 Villingendorf (DE); Zimmermann, Timo, 72160 Horb/Dettingen (DE)
(74) Vertreter: Hoffmann Eitle

(56) Entgegenhaltungen:
- DE-A1-102006 025 747
- US-A1- 2008 126 424
- US-A1- 2010 287 057
- Sunbellt Graphics systems: "14.5 things you need to know about QR codes.", sunbeltmobile.com , 1. Juni 2011 (2011-06-01), XP002715659, Fayetttville, GA 30214 Gefunden im Internet: URL:http://sunbelt-usa.com/docs/14%20Thing s%20About%20QR.pdf [gefunden am 2013-10-20]
- Jamie Todd Rubin: "Going paperless: digitize instruction manuals and use QR codes to find them in context | Jamie Todd Rubin", , 24 April 2012 (2012-04-24), XP055225536, Retrieved from the Internet: URL:http://www.jamierubin.net/2012/04/24/g oing-paperless-digitize-instruction-manual s-and-use-qr-codes-to-find-them-in-context / [retrieved on 2015-11-03]
- GERRIT MEIXNER ET AL: "User interaction evolution in the SmartFactoryKL", 20100906; 1077952576 - 1077952576, 6 September 2010 (2010-09-06), pages 211-220, XP058389813, ISBN: 978-1-78017-130-2
- SmartFactory-KL: "Augmented.SmartFactoryKL - Demo", Youtube, 9 August 2011 (2011-08-09), page 5 pp., XP054982296, Retrieved from the Internet: URL:https://www.youtube.com/watch?v=Gld4fX yk14A&t=120s [retrieved on 2021-09-29]
- SmartFactory-KL: "SmartFactory - Towards a Factory-of-Things", Youtube, 24 March 2011 (2011-03-24), page 5 pp., XP054982297, Retrieved from the Internet: URL:https://www.youtube.com/watch?v=EUnnKA FcpuE&t=300s [retrieved on 2021-09-29]

## Beschreibung

### Technisches Gebiet

Die Erfindung betrifft ein Verfahren zur Übertragung von Handlungsanweisungen von einer Prozesseinheit zu einer portablen Umwandlungseinrichtung. Die Offenbarung bezieht sich auch auf eine Prozessvorrichtung mit einer Prozesseinheit, einer Schnittstelle und einer Umwandlungseinrichtung.

### Stand der Technik

Prozessvorrichtungen der eingangs genannten Art finden bei der Bearbeitung von Werkstücken, die bevorzugt zumindest teilweise aus Holz, Holzwerkstoffen, Kunststoff oder dergleichen bestehen, breite Anwendung. So zum Beispiel werden Handlungsanweisungen an einen Bediener ausgegeben, wenn Umrüstungen nicht vollautomatisch durchgeführt werden können und Verstellungen von Hand vorgenommen werden müssen. So müssen zum Beispiel Maschinenelemente auf eine bestimmte Position gebracht werden. Diese Handlungsanweisungen werden üblicherweise auf dem Bedienfeld der Maschine angezeigt.

Wenn die Stelle, an der die Handlung an der Maschine durchgeführt werden soll, nicht in unmittelbarer Sichtweite des Bedienfelds liegt, muss sich der Bediener die Handlungsanweisung merken. Dies führt jedoch dazu, dass der Bediener oft zwischen dem Bedienfeld und der Stelle an der Maschine hin und her gehen muss, an der die Handlung vorgenommen werden muss. Insbesondere bei großen Maschinen, wie sie bei der Holzbearbeitung zum Einsatz kommen, wird sehr viel Zeit dafür benötigt. Darüber hinaus besteht die Gefahr, dass der Bediener die Handlungsanweisung oder einen Teil der Handlungsanweisung vergisst, während er sich von dem Bedienfeld zu der Stelle bewegt, an der die Handlung ausgeführt werden soll. Dadurch wird die Gefahr erhöht, dass Fehler passieren, indem zum Beispiel eine falsche Position eines Maschinenelements eingestellt wird. Dadurch kann die Maschine beschädigt und sogar der Bediener in Gefahr gebracht werden.

In diesem Zusammenhang ist aus dem Stand der Technik bekannt, dass ein Drucker am Bedienfeld vorgesehen ist, durch den die Handlungsinformation ausgedruckt wird. Der Bediener hat dann die Handlungsanweisung in Papierform am Ort der Handlung vorliegen. Jedoch ist das Bereitstellen eines Druckers an jeder Maschine teuer, das Ausdrucken der Handlungsanweisung zeitaufwendig und der Druckvorgang durch die Umfeldbedingungen stark fehleranfällig.

Des Weiteren wurde vorgeschlagen, mehrere Anzeigeinstrumente an der Maschine vorzusehen. Dadurch müsste der Bediener weniger lange Wege zwischen dem Lesen der Handlungsanweisung und der Stelle zurücklegen, an der die Handlungsweisung umgesetzt werden soll. Jedoch ist offensichtlich, dass nicht an jeder Stelle der Maschine ein Anzeigeinstrument vorgesehen sein kann, und somit die Sicht auf ein Anzeigeinstrument nicht immer gewährleistet sein kann. Darüber hinaus ist die Anschaffung zusätzlicher Anzeigeinstrumente teuer.

Die Verwendung von QR-Codes und das Einlesen in ein Smartphone im Zusammenhang mit Aufbauanweisungen ist beispielsweise aus der Broschüre "14.5 Things you need to know about QR-Codes" von Sunbelt Graphic Systems bekannt. Die US 2010/0287057 A1 offenbart das Ablesen eines Preises eines Artikels mittels eines Smartphones, wodurch der Einkäufer die Möglichkeit hat zu entscheiden, ob die Artikel, die er kaufen möchte, beim Zahlen an der Theke ausgegeben oder nach Hause geliefert werden sollen.

Die DE 10 2006 025 747 A1 offenbart ein automatisiertes System mit einer netzwerkbasierten Steuerung enthaltend eine oder mehrere Textilmaschinen, eine oder mehrere HMI-Einheiten, sowie eine Vernetzung zwischen der Maschinensteuerung und den HMI-Einheiten. Dabei sind die HMI-Einheiten als "Thin Clients" ausgebildet, wobei deren funktionale Ausstattung im Wesentlichen auf die Anzeige und Eingabe von Daten beschränkt ist, und Mittel zum Abrufen und Laden von Prozessdaten und Software auf die HMI-Einheit von einem entfernten Rechnervorgesehen.

Das Digitalisieren von Bedienungsanleitungen unter Verwendung von QR-Codes ist aus dem Beitrag von Jamie Todd Rubin "Going paperless: digitize instruction manuals and use QR codes to find them in context" veröffentlicht auf der Homepage www.jamierubin.net bekannt.

GERRIT MEIXNER ET AL: "User interaction evolution in the SmartFactoryKL", September 2010 (1010-09-06), Seiten 211-220, ISBN: 978-1-78017-130-2 offenbart einige Merkmale des Anspruchs 1. Nicht ist darin u.a. offenbart, dass eine berührungslose Schnittelle die Prozessdaten, welche der kodierten Handlungsanweisung entsprechen, in Form eines binären Symbols, das ein Schwarz-Weiß-Muster aufweist, auf der Bildschirmanzeige anzeigt.

### Darstellung der Erfindung

Es ist Aufgabe der vorliegenden Erfindung, auf kostengünstige und einfache Weise die Übertragung zumindest einer Handlungsanweisung weniger fehleranfällig und schneller zu gestalten.

Die Aufgabe wird erfindungsgemäß durch das Verfahren zur Übertragung zumindest einer Handlungsanweisung mit den Merkmalen von Anspruch 1 gelöst.

Offenbart ist eine Prozessvorrichtung mit einer Prozesseinheit, insbesondere zum Transport, zur Verpackung oder Handhabung von Werkstücken, die bevorzugt zumindest teilweise aus Holz, Holzwerkstoffen, Kunststoff oder dergleichen bestehen. Die Prozessvorrichtung weist eine berührungslose Schnittstelle für Prozessdaten auf, die zumindest einer Handlungsanweisung entsprechen, die die Prozesseinheit betrifft. Eine portable Umwandlungseinrichtung mit einer Erfassungseinrichtung zum Erfassen der Prozessdaten und Umwandeln derer in die zumindest eine Handlungsanweisung und einer Ausgabeeinrichtung zum Ausgeben der zumindest einen Handlungsanweisung ist vorgesehen.

Das Verfahren zur Übertragung zumindest einer Handlungsanweisung ermöglicht es, Prozessdaten, die zumindest einer Handlungsanweisung entsprechen, die eine Prozesseinheit betrifft, insbesondere zum Transport, zur Verpackung oder Handhabung von Werkstücken, die bevorzugt zumindest teilweise aus Holz, Holzwerkstoffen, Kunststoff oder dergleichen bestehen, über eine berührungslose Schnittstelle von der Prozesseinheit zu einer portablen Umwandlungseinrichtung zu übertragen. Die Prozessdaten werden dann von einer Erfassungseinrichtung der Umwandlungseinrichtung erfasst und in die zumindest eine Handlungsanweisung umgewandelt, die dann von einer Ausgabeeinrichtung der Umwandlungseinrichtung ausgegeben wird.

Hierbei begibt sich ein Bediener nach Ausgabe der Handlungsanweisung zu der Stelle der Prozesseinheit, an der die Handlung durchgeführt werden soll, und führt diese dann gemäß der Handlungsanweisung aus. Dadurch wird der Arbeitsablauf weiter optimiert.

Die Prozesseinheit ist eine Maschinenstraße, eine Durchlaufmaschine, eine Verpackungsmaschine oder ein Bearbeitungszentrum, wie zum Beispiel eine CNC-Maschine.

In der Umwandlungseinrichtung werden Prozessdaten eingelesen, die nicht in lesbarer Textform vorliegen, und dann durch die Umwandlungseinrichtung als Handlungsanweisung ausgegeben, die in lesbarer Textform vorliegt. Die Handlungsanweisung wird also kodiert als Prozessdaten übertragen und erfasst und vor der Ausgabe dekodiert. Insbesondere kann durch diese Umwandlung die Fehlerbehaftung der Handlungsanweisung reduziert und damit die Datensicherheit erhöht werden, wenn die Prozessdaten ein Format aufweisen, das eine Fehlererkennung ermöglicht.

Die Prozessdaten entsprechen einer oder mehreren Handlungsanweisungen. Dabei bezieht sich die Handlungsanweisung auf jede beliebige Handlung, die von einem Bediener an der Prozesseinheit zu tätigen ist und beispielsweise nicht durch der Prozesseinheit selbst durchgeführt werden kann.

Der Erfindung liegt der Gedanke zugrunde, von einer Prozesseinheit zumindest eine Handlungsanweisung an eine Ausgabevorrichtung zu übertragen, ohne mit dieser mechanisch verbunden zu sein und somit räumlich gebunden zu sein. Durch die berührungslose Schnittstelle werden Prozessdaten an eine Umwandlungseinrichtung übertragen, die portabel, das heißt tragbar bzw. mobil, ist. Die Umwandlungseinrichtung kann einfach von einem Bediener mit sich geführt werden, ohne ihn zum Beispiel bei der Ausübung einer Handlung an der Prozesseinheit zu beschweren oder zu behindern. Die Umwandlungseinrichtung erfasst die Prozessdaten über die berührungslose Schnittstelle, ohne dass eine mechanische oder direkte Verbindung dazu nötig ist. Die Schnittstelle ist eine optische und kabellose Schnittstelle . Somit kann sich die Umwandlungseinrichtung zum Ausgeben der Handlungsanweisung ohne Weiteres an einem Ort beabstandet zu der Schnittstelle befinden. Dadurch ist die Handlungsanweisung immer an jeder beliebigen Stelle über die Ausgabeeinrichtung der Umwandlungseinrichtung verfügbar, zum Beispiel ablesbar. Dies bringt eine Zeitersparnis mit sich, da der Bediener keine weiten Wege von den verschiedenen Stellen, an denen eine Handlungsanweisung durchgeführt werden muss, und dem einen Bedienfeld an der Prozesseinheit zurücklegen muss, wenn er eine Handlungsanweisung ablesen möchte. Somit können Fehler eines Bedieners in Bezug auf die Handlungsanweisung vermieden werden.

Besonders vorteilhafte Weiterbildungen der Erfindung sind in den abhängigen Ansprüchen angegeben.

Erfindungsgemäß weist die berührungslose Schnittstelle eine Bildschirmanzeige zum Anzeigen der Prozessdaten in Form von binären Symbolen, vorzugsweise 2D-Code, auf. Durch die Anzeige der Prozessdaten in Form von Symbolen ist eine einfache und gleichzeitig fehlerfreie Erfassung durch die Erfassungseinrichtung möglich. Durch Verwendung einer Bildschirmanzeige können Symbole beliebig aktualisiert und verändert werden. Die Symbole können jeweils einer Handlungsanweisung oder einem Satz Handlungsanweisungen entsprechend angezeigt werden. Ein Symbol kann dabei eine oder mehrere, beispielweise hintereinander auszuführende Handlungsanweisungen verkörpern bzw. (kodiert) aufweisen. Das binäre Symbol weist ein Schwarz-Weiß-Muster auf, beispielsweise einen Barcode oder einen 2D-Code. Weit verbreitet ist die Verwendung von sog. QR-Codes ("quick response"-Code). Diese bieten darüber hinaus den Vorteil, dass eine fehlerhafte Übertragung oder Beschädigung des Codes erkannt und rechnerisch behoben werden kann.

Erfindungsgemäß weist die Erfassungseinrichtung eine Kamera auf und ein Bediener fotografiert die auf der Anzeige angezeigten Symbole mit der Kamera ab. Dies führt zu einer einfachen und fehlerfreien Erfassung der Prozessdaten.

Zusätzlich kann die Schnittstelle eine Datenübertragung basierend auf Bluetooth oder WLAN aufweisen. Diese Übertragungsstandards sind ebenso für nahezu alle Mobiltelefone und Smartphones verfügbar. Dies ermöglicht eine einfach zu realisierende und fehlerfreie Datenübertragung. Insbesondere kann die Erfassung der Prozessdaten so auch aus weiterem räumlichen Abstand zu der Prozesseinheit erfolgen.

Des Weiteren ist es vorzuziehen, dass die Ausgabeeinrichtung eine Textausgabe aufweist, wodurch die Handlungsanweisung zu einem späteren Zeitpunkt weiterhin vorliegt. Insbesondere kann die Handlungsanweisung so wiederholt abgelesen werden.

Insbesondere kann die Umwandlungseinrichtung ein Mobiltelefon oder ein Smartphone sein. Heutzutage ist die Verwendung dieser portablen elektronischen Geräte weit verbreitet, sodass davon auszugehen ist, dass auch der Bediener ein solches besitzt. Somit müsste keine zusätzliche Umwandlungseinrichtung für die Erfassung und Umwandlung der Prozessdaten und Ausgabe der zumindest einen Handlungsanweisung angeschafft werden. Dies führt dazu, dass die Kosten für die Umsetzung des erfindungsgemäßen Verfahrens gering sind.

Insbesondere kann dadurch, dass die Handlungsanweisung automatisch als Prozessdaten an die Schnittstelle geleitet wird, dem Bediener eine Handlungsanweisung schnell zugänglich gemacht werden. Dies beschleunigt den Arbeitsablauf.

Vorteilhafter Weise kann der Bediener eine vergrößerte Ansicht der Symbole anfordern, bevor diese durch die Erfassungseinrichtung erfasst werden. Dadurch kann vor Erfassen das Symbol kleiner dargestellt sein, sodass die Anzeige verschiedene weitere Anzeigeelemente gut darstellen kann. Um eine fehlerfreie Erkennung und Umwandlung zu ermöglichen, wird dann zur Erfassung eine Vergrößerung der Symbole gezeigt.

Zur weiteren Optimierung können darüber hinaus mehrere Handlungsanweisungen, die einem Satz Prozessdaten, beispielsweise einem Symbol, entsprechen, von der Ausgabeeinrichtung ausgegeben werden, sodass der Bediener sich von einer Stelle, an der eine Handlung durchgeführt werden soll, direkt zu der nächsten Stelle begeben kann, an der eine Handlung durchzuführen ist.

Weitere Merkmale und Vorteile der Erfindung werden anhand der nachfolgenden ausführlichen Beschreibung noch näher ersichtlich werden.

Kurze Beschreibung der Zeichnungen
- Fig. 1: zeigt ein Blockdiagramm, das die Übertragung der Prozessdaten gemäß der vorliegenden Erfindung verdeutlicht; und
- Fig. 2: zeigt ein Blockdiagramm, das den Ablauf in der Umwandlungseinrichtung gemäß der vorliegenden Erfindung verdeutlicht.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

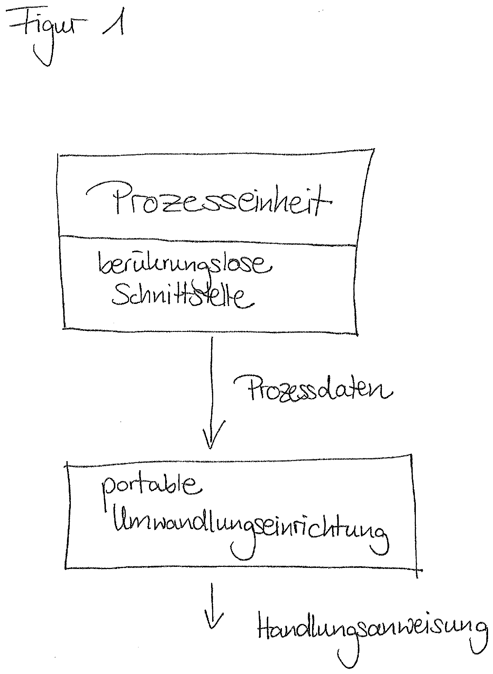

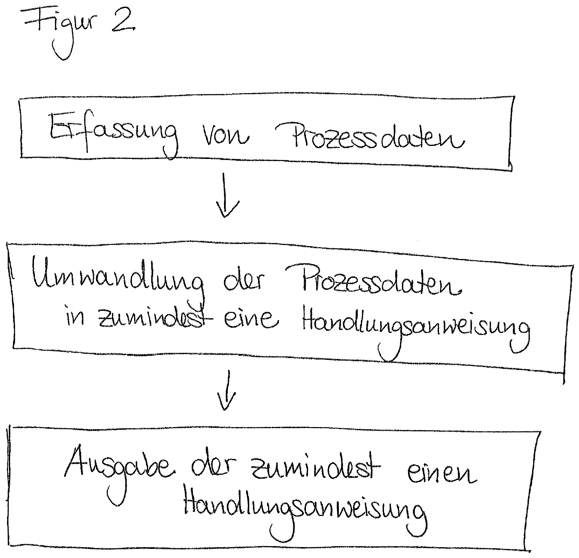

In Figur 1 ist schematisch gezeigt, dass die Prozessdaten über eine berührungslose Schnittstelle der Prozesseinheit an die portable Umwandlungseirichtung übertragen werden. Dabei werden gemäß Figur 2 die Prozessdaten von der Erfassungseinrichtung der Umwandlungseinrichtung erfasst und in eine Handlungsanweisung umgewandelt. Danach erfolgt die Ausgabe der Handlungsanweisung durch eine Ausgabeeinrichtung.

Gemäß einer ersten Ausführungsform ist die berührungslose Schnittstelle eine Bildschirmanzeige, die die Prozessdaten vorzugsweise in Form von QR-Code anzeigt. Dieser Code wird erzeugt, sobald eine Handlung durch den Bediener, zum Beispiel eine Handverstellung, zu tätigen ist. Der Code wird zunächst durch ein kleines Symbol auf der Bildschirmanzeige angezeigt und dann durch Drücken auf das kleine Symbol auf dem Bildschirm vergrößert dargestellt. Dieser Code wird nun mit einer Kamera eines Smartphones oder Mobiltelefons fotografiert und eingescannt. Der QR-Code stellt somit Prozessdaten dar, die durch eine geeignete Software in dem Smartphone oder Mobiltelefon in eine oder mehrere Handlungsanweisungen umgewandelt werden. Insbesondere kann/können auf dem Display des Mobiltelefons eine zu tätigende Handverstellung, Sichtkontrolle oder/und Entnahme eines Werkstücks in Textform angezeigt werden.

Der Bediener kann sich, nachdem er den angezeigten QR-Code abfotografiert hat, das heißt nachdem die Prozessdaten erfasst worden sind, von der Schnittstelle der Prozesseinheit weg bewegen. Er wird sich zu der Stelle bewegen, an der die Handlungsanweisung ausgeführt werden soll. Er kann dann direkt vor Ausführung der Handlung die Handlungsanweisung erneut ablesen, um eine fehlerhafte Ausführung zu vermeiden. Darüber hinaus kann sich der Bediener, nachdem die Handlung ausgeführt ist, gleich zu der nächsten Stelle begeben, an der eine Handlung getätigt werden soll, ohne zwischendurch zum Bedienfeld zum Lesen der nächsten Handlungsanweisung zu gehen.

Zusätzlich kann die berührungslose Schnittstelle eine Datenübertragung mittels Bluetooth oder WLAN aufweisen. In einer nicht-beanspruchten zweiten Ausführungsform es nicht nötig, eine Anzeige als berührungslose Schnittstelle zu schaffen, da beispielsweise die Prozessdaten auf das Mobiltelefon übertragen werden können, sobald der Bediener in eine bestimmte Nähe zu der Prozesseinheit kommt. Dementsprechend ist keine Kamera als Erfassungseinrichtung nötig, da eine Schnittstelle zur Erfassung per Bluetooth oder WLAN übertragener Daten vorgesehen ist. Im Übrigen entspricht die zweite Ausführungsform der ersten Ausführungsform.

Der Fachmann wird erkennen, dass insbesondere auch der Einsatz zukünftiger handelsüblicher und weit verbreiteter portabler elektrischer Geräte als Umwandlungseinrichtung möglich ist. Denkbar ist auch, dass die nicht-beanspruchte Datenübertragung mittels kabelloser Technologien umgesetzt wird, die gegenwärtig noch nicht in Mobiltelefonen oder Smartphones standardmäßig vorgesehen sind.

## Patentansprüche

1. Verfahren zur Übertragung zumindest einer Handlungsanweisung, bei dem Prozessdaten, die nicht in lesbarer Textform vorliegen und die in kodierter Form der Handlungsanweisung entsprechen, über eine berührungslose Schnittstelle von der Prozesseinheit an eine portable Umwandlungseinrichtung übertragen werden,
wobei die Handlungsanweisung eine Prozesseinheit betrifft, die eine Maschinenstraße, eine Durchlaufmaschine, eine Verpackungsmaschine oder ein Bearbeitungszentrum ist, zur Verpackung oder Handhabung von Werkstücken, die bevorzugt zumindest teilweise aus Holz, Holzwerkstoffen, Kunststoff oder dergleichen bestehen, wobei
die berührungslose Schnittstelle die Prozessdaten, welche der kodierten Handlungsanweisung entsprechen, in Form eines binären Symbols, das ein Schwarz-Weiß-Muster aufweist, auf einer Bildschirmanzeige anzeigt;
die Prozessdaten von einer Erfassungseinrichtung der Umwandlungseinrichtung erfasst und in die Handlungsanweisung dekodiert werden, und
die Handlungsanweisung in lesbarer Textform von einer Ausgabeeinrichtung der Umwandlungseinrichtung ausgegeben wird,
wobei die Erfassungseinrichtung eine Kamera aufweist und ein Bediener das auf der Bildschirmanzeige der Prozesseinheit angezeigte binäre Symbol zur Erfassung mit der Kamera fotografiert, und
sich der Bediener nach Ausgabe der Handlungsanweisung zu der Stelle der Prozesseinheit begibt, an der die Handlung durchgeführt werden soll, und dann entsprechend der Handlungsanweisung die Handlung durchführt.

2. Verfahren zur Übertragung zumindest einer Handlungsanweisung nach Anspruch 1, bei dem die Handlungsanweisung automatisch als Prozessdaten an die Schnittstelle geleitet wird, sobald eine Handlungsanweisung für einen Bediener vorliegt.

3. Verfahren zur Übertragung zumindest einer Handlungsanweisung nach Anspruch 1 oder 2, **dadurch gekennzeichnet, dass** die berührungslose Schnittstelle die Prozessdaten in Form von 2D-Code auf der Bildschirmanzeige anzeigt.

4. Verfahren zur Übertragung zumindest einer Handlungsanweisung nach einem der vorhergehenden Ansprüche, bei dem ein Bediener eine vergrößerte Anzeige der Symbole vor deren Erfassen durch die Erfassungseinrichtung anfordert.

5. Verfahren zur Übertragung zumindest einer Handlungsanweisung nach einem der vorhergehenden Ansprüche, bei dem die Umwandlungseinrichtung ein Mobiltelefon oder ein Smartphone ist.

## Claims

1. Method for transmitting at least one procedural instruction, in which process data which are not in readable text form and which correspond in coded form to the procedural instruction are transmitted via a contactless interface from the process unit to a portable conversion apparatus,
wherein the procedural instruction relates to a process unit which is a production line, a throughput machine, a packaging machine or a processing centre, for packaging or handling workpieces which preferably consist at least partially of wood, wood materials, plastic or the like, wherein
the contactless interface displays the process data corresponding to the coded procedural instruction on a screen display in the form of a binary symbol having a black and white pattern;
the process data are acquired by an acquisition apparatus of the conversion apparatus and decoded into the procedural instruction, and
the procedural instruction is issued in readable text form by an output apparatus of the conversion apparatus,
wherein the acquisition apparatus has a camera and an operator photographs the binary symbol displayed on the screen display of the process unit for acquisition with the camera, and
after the procedural instruction is output, the operator goes to the point of the process unit where the procedure is to be performed, and then performs the procedure in accordance with the procedural instruction.

2. Method for transmitting at least one procedural instruction according to claim 1, in which the procedural instruction is automatically routed as process data to the interface as soon as a procedural instruction for an operator is available.

3. Method for transmitting at least one procedural instruction according to claim 1 or 2, **characterised in that** the contactless interface displays the process data in the form of 2D code on the screen display.

4. Method for transmitting at least one procedural instruction according to any of the preceding claims, in which an operator requests enlarged display of the symbols before they are acquired by the acquisition apparatus.

5. Method for transmitting at least one procedural instruction according to any of the preceding claims, in which the conversion apparatus is a mobile phone or a smartphone.

## Revendications

1. Procédé de transmission d'au moins une instruction de manipulation, dans lequel des données de processus qui ne sont pas sous un format de texte lisible et qui correspondent à l'instruction de manipulation sous un format codé sont transmises d'une unité de traitement à un dispositif de conversion portable via une interface sans contact,
dans lequel l'instruction de manipulation concerne une unité de processus, qui est une ligne de machines, une machine de traitement en continu, une machine de conditionnement ou un centre de traitement, pour le conditionnement ou la manipulation de pièces à usiner, qui sont de préférence constituées au moins partiellement de bois, de matériaux à base de bois, de matières plastiques ou analogue, dans lequel
l'interface sans contact affiche les données de processus qui correspondent à l'instruction codée sous la forme d'un symbole binaire présentant un motif noir et blanc sur un écran d'affichage ;
les données de processus sont détectées par un dispositif de détection du dispositif de conversion et décodées dans l'instruction de manipulation, et
l'instruction de manipulation est émise sous un format de texte lisible par un dispositif de sortie du dispositif de conversion,
dans lequel le dispositif de détection comprend une caméra et un opérateur photographie le symbole binaire affiché sur l'écran d'affichage de l'unité de traitement pour une détection à l'aide de la caméra, et
après l'émission de la consigne de manipulation, l'opérateur se rend au point de l'unité de processus où la manipulation doit être effectuée puis exécute la manipulation conformément à l'instruction de manipulation.

2. Procédé de transmission d'au moins une instruction de manipulation selon la revendication 1, dans lequel l'instruction de manipulation est acheminée automatiquement vers l'interface sous la forme de données de processus dès qu'une instruction de manipulation est disponible pour un opérateur.

3. Procédé de transmission d'au moins une instruction selon la revendication 1 ou 2, **caractérisé en ce que** l'interface sans contact affiche les données de processus sous un format de code 2D sur l'écran d'affichage.

4. Procédé de transmission d'au moins une instruction de manipulation selon l'une quelconque des revendications précédentes, dans lequel un opérateur demande un affichage agrandi des symboles avant qu'ils ne soient détectés par le dispositif de détection.

5. Procédé de transmission d'au moins une instruction de manipulation selon l'une quelconque des revendications précédentes, dans lequel le dispositif de conversion est un téléphone mobile ou un smartphone.
